# EUROPEAN PATENT APPLICATION

(11) **EP 0 761 354 A1**
(43) Date of publication of application: **12.03.1997**
(21) Application number: 96113806.2
(22) Date of filing: 29.08.1996
(51) Int. Cl.: B23D 25/04, H02K 41/02

(54) **Tracking shears**

(30) Priority: 11.09.1995 IT UD950172
(71) Applicant: DANIELI CENTRO MASKIN SpA, I-33040 Pradamano (UD) (IT)
(72) Inventor: Sittaro, Elio, 33049 S.Pietro al Natisone (UD) (IT); Menosso, Fausto, 33040 Pradamano (UD) (IT); Pussini, Alfonso, 33043 Cividale del Friuli (UD) (IT)
(74) Representative: Petraz, Gilberto Luigi

(57) **Abstract**

Tracking shears of the type associated with a drawing machine for metals and comprising a shearing unit (11) solidly associated with a trolley (12) moving longitudinally along the base (13) of the shears (10), the trolley (12) being driven parallell to the axis of feed of the drawn product by at least one linear electric motor (14).

## Description

This invention concerns a tracking shears as set forth in the main claim.

The tracking shears according to the invention is applied in the field of shearing to size a metal product as it is discharged continuously from the production line or machine.

In the field of drawing metal materials, the state of the art covers tracking shears used to shear the drawn product to size.

In drawing plants known to the state of the art, the speed of discharge of the drawn product is generally between 120 and 150 metres per minute, and therefore the tracking shears has to perform about 50-60 cuts a minute.

In these plants, the tracking shears is mounted on trolley means capable of a linear two-directional movement parallel to the direction of feed of the drawn product.

Each cut includes a stage when the trolley means are accelerated to bring them substantially up to the speed of the drawn product, a shearing stage proper while the trolley means are at the same speed as the drawn product, and a stage when the trolley means return to the initial position ready for the next cut.

Shears used in the state of the art are substantially divided into three basic groups as far as concerns the movement of the trolley; these are, to be more precise, with a bell cam, with a hydraulic cylinder or with an electric motor associated with a pinion and rack.

In the first group, the shears unit is formed by a base inside which there is inserted a bell cam mounted on a shaft supported at the two ends by an equal number of bearings.

In the upper part of the base the shearing trolley is mounted, which runs on guides and is thrust by the cam by means of a counter pressure roll, the return of the trolley being achieved by means of an air cylinder.

The shearing is performed by means of a fixed bush and moving blade driven by means of levers which are impeded by a pin attached to the base.

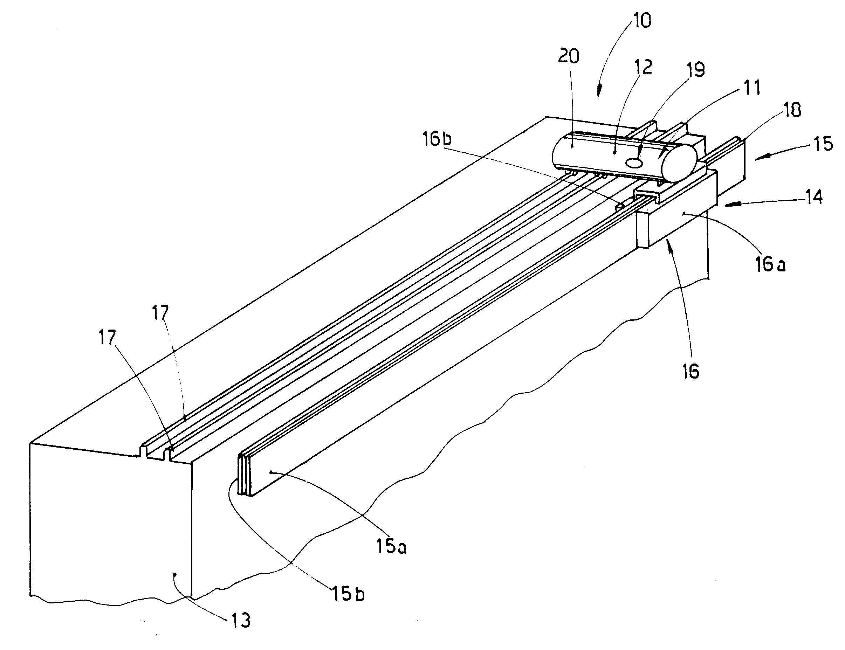

The cam is moved by the shaft of the drawing assembly by means of a brake-clutch unit which engages the shears when it has to shear.

In this type of shears the force of the shearing is given by the shaft of the drawing machine given that the system of shearing levers resists the feed of the trolley at the moment of shearing.

This type of shears was applied to machines which worked at a low speed and had the disadvantage that it varied the length of the shearing with the variation in the speed.

The second group of shears known to the state of the art includes moving the shears trolley with a hydraulic cylinder and servovalve, the shearing assembly being of the hydraulic type.

The system is fed by a hydraulic power unit which, in the case of fast machines, has a considerable installed power with very low yields.

The third group of shears known to the state of the art includes moving the shears trolley by means of an electric motor, a reduction gear box, a pinion and a rack.

The pinion, the reduction gear box and the motor are attached to the base whereas the rack is solid with the trolley and therefore movable.

The electric motors used can be either continuous current motors or brushless motors or vector motors.

More recent drawing machines however have a drawing speed which can reach 500 metres per minute and even more, and consequently the tracking shears has to carry out as many as nearly 150-180 cuts per minute.

With tracking shears known to the state of the art, the masses in play, and therefore the forces of inertia too, are such that they do not allow the tracking shears to carry out such a high number of shearings to size in that it is not possible to move the shears at these speeds except with very high installed power.

Another disadvantage of tracking shears known to the state of the art is that, with the increase in the shearing frequency, the precision of the shearing point is considerably reduced, and consequently there is an increase in the amount of finished product which has to be scrapped

The present applicants have designed, tested and embodied this invention to overcome the shortcomings of the state of the art and to achieve further advantages.

This invention is set forth and characterised in the main claim, while the dependent claims describe variants of the idea of the main embodiment.

The purpose of this invention is to provide a tracking shears, to be associated with drawing machines, which will guarantee a very high frequency of shearing and at the same time ensure the desired accuracy in shearing.

The tracking shears according to the invention is simple both in construction and maintenance and requires little installed power.

The tracking shears according to the invention has very low weight and inertia which makes it easy to control at every stage of the working cycle.

In the tracking shears according to the invention the moving trolley on which the shearing unit is mounted is driven by at least one linear electric motor with an axis parallel to the axis of feed of the drawn product.

According to the invention, the repulsion plates of the linear electric motor, which normally carry the magnets, are advantageously fixed and extend longitudinally along the base and parallel to the drawing axis, while the unit which normally carries the repulsion coils is associated with the moving trolley.

The repulsion plates lie advantageously on a substantially vertical plane.

According to a variant, the repulsion plates which carry the magnets are movable and the coils are mounted on the fixed plate.

The moving units are advantageously associated with each other at the upper part to prevent them from holding the dust and dirt which could create obstacles to the moving trolley.

According to a variant, in order to obtain higher forces, it is possible to associate more than one linear electric motor in parallel.

The structure is thus simple, light and has a low inertia which permits a high frequency of cutting and the desired accuracy in the cutting even at the high speeds.

The attached figure is given as a non-restrictive example and shows in three dimensional form a preferred embodiment of the invention.

The reference number 10 in the attached figure generally denotes a tracking shears according to the invention.

The tracking shears 10 according to the invention comprises a shearing unit 11 associated solidly with a trolley 12 moving longitudinally along guides 17 associated at the upper end with the base 13 of the shears 10.

In this case, the shearing unit 11 is inserted inside a substantially cylindrical body 20 associated with the trolley 12 and having a through hole 19 in which the drawn product travels.

According to other possible forms of the invention, not shown here, the shearing unit 11 can be of any other type known to the state of the art as this does not affect the purposes of the invention.

The trolley 12 is driven in a linear, two-directional movement along the axis of feed of the drawn product by a linear electric motor 14 comprising a fixed repulsion plate 15 solidly associated with the base 13 and a moving unit 16, which normally carries the repulsion coils, associated solidly with the trolley 12.

In this case, the linear electric motor 14 has two fixed plates 15a, 15b facing each other and two moving plates 16a, 16b associated at the upper part with each other by means of a joining element 18 solid with the trolley 12.

With the repulsion plates, respectively the fixed ones 15a, 15b and the moving ones 16a, 16b, placed vertically and open at the lower end, it is possible to avoid the gathering of dirt and dust on the said plates and thus avoid problems with the traveling of the moving unit 16.

According to a variant, the shears 10 according to the invention has running plane means which extend on the upper part of the base 13 on which the drawn product runs when it is discharged from the hole 19 in the trolley 12, the running plane means functioning also as an element to protect the linear electric motor 14 positioned underneath.

According to another variant not shown here, in order to obtain higher forces, the shears 10 has two or more linear electric motors 14 combined in parallel.

## Claims

1. Tracking shears of the type associated with a machine to draw metals and comprising a shearing unit (11) associated solidly with a trolley (12) moving longitudinally along the base (13) of the shears (10), the device being characterised in that the trolley (12) is driven parallell to the axis of feed of the drawn product by at least one linear electric motor (14).

2. Tracking shears as in Claim 1, in which the linear electric motor (14) comprises a repulsion plate (15), carrying magnets, associated solidly with the base (13) and a moving unit (16), carrying the repulsion coils, associated solidly with the trolley (12).

3. Tracking shears as in Claim 1, in which the linear electric motor (14) comprises a repulsion plate (15), carrying the coils, associated solidly with the base (13) and a moving unit (16), carrying the magnets, associated solidly with the trolley (12).

4. Tracking shears as in any claim hereinbefore, in which the fixed repulsion plate (15) and the moving unit (16) lie on parallel vertical planes.
